# EUROPÄISCHE PATENTSCHRIFT

(11) **EP 3 403 240 B1**
(45) Veröffentlichungstag und Bekanntmachung des Hinweises auf die Patenterteilung: **06.11.2024**
(21) Anmeldenummer: 16808931.6
(22) Anmeldetag: 21.11.2016
(51) Int. Cl.: G06T 19/20, H04N 7/15, G06T 19/00, H04N 13/239, H04N 13/271

(54) **VORRICHTUNG UND VERFAHREN ZUR ÜBERLAGERUNG ZUMINDEST EINES TEILS EINES OBJEKTS MIT EINER VIRTUELLEN OBERFLÄCHE**
DEVICE AND METHOD FOR SUPERIMPOSING AT LEAST ONE PART OF AN OBJECT WITH A VIRTUAL SURFACE
DISPOSITIF ET PROCÉDÉ POUR SUPERPOSER AU MOINS UNE PARTIE D'UN OBJET À UNE SURFACE VIRTUELLE

(30) Priorität: 20.11.2015 DE 102015223003
(43) Veröffentlichungstag der Anmeldung: 21.11.2018
(73) Patentinhaber: Bitmanagement Software GmbH, 82335 Berg (DE)
(72) Erfinder: SCHICKEL, Peter, 82335 Berg (DE); SENG, Ulrich, 82319 Starnberg (DE)
(74) Vertreter: Zimmermann, Tankred Klaus
(86) Internationale Anmeldenummer: PCT/EP2016/078351
(87) Internationale Veröffentlichungsnummer: WO 2017/085325

(56) Entgegenhaltungen:
- WO-A1-2013/167901
- DE-A1- 10 310 857
- DE-T2- 69 938 178
- US-A1- 2010 271 368
- ANONYMOUS: "Photogrammetry - Wikipedia", 9 November 2015 (2015-11-09), XP055338471, Retrieved from the Internet <URL:https://en.wikipedia.org/w/index.php?title=Photogrammetry&oldid=689846734> [retrieved on 20170124]

## Beschreibung

Die vorliegende Erfindung bezieht sich auf eine Vorrichtung und ein Verfahren zur Überlagerung zumindest eines Teils eines Objekts mit einer virtuellen Oberfläche, wobei es sich bei dem Objekt um eine Person handelt. Ausführungsbeispiele zeigen die Überlagerung des Gesichts eines Schauspielers mit einer Maske oder dem Gesicht oder dem ganzen Körper einer anderen Person. Die Ausrichtung sowie die Form der Maske bzw. des Gesichts der anderen Person wird beispielsweise anhand eines absoluten Referenzpunkts im Gesicht des Schauspielers vorgenommen, dessen Position und Ausrichtung absolut und somit nicht nur relativ zu den aufnehmenden 3D-Kameras bestimmt wird. Die absolute Positionsbestimmung kann z.B. mittels Sonar oder einem anderen kontaktlosen Ortungsverfahren erfolgen.

Bekannte Verfahren, um Objekten, die in 3D aufgenommen werden, andere Oberflächen zu geben, nutzen eine optische Referenzbestimmung. Dies kann z. B. eine regelmäßige oder unregelmäßige Anordnung von Punkten auf dem Objekt, wie z. B. dem Gesicht des Schauspielers sein. Die Punkte können aufgeklebt oder mittels Infrarot für die 3D-Kameras sichtbar im Gesicht des Schauspielers platziert werden. Mit diesem Verfahren können jedoch die Referenzpunkte nur mit einer Genauigkeit von ca. ± 1 cm in ihrer Position relativ zu den Kameras bestimmt werden. Ferner zeichnet sich dieses Verfahren durch vergleichsweise starkes Rauschen aus. Bei einer Reichweite von maximal fünf Metern können mit diesem Verfahren ebenfalls keine weitläufigen Szenerien dargestellt werden. Neben der geringen Auflösung, die sich aus der Anzahl der auf dem Gesicht des Schauspielers befindlichen Referenzpunkte ergibt, ist ferner die Gesichtserkennung, die zur Nachführung der Referenzpunkte verwendet wird, vergleichsweise langsam und verhindert beispielsweise eine Echtzeitverwendung, z.B. in Videokonferenzen, da die auftretenden Latenzen eine kontinuierliche Kommunikation und Diskussion zwischen den Konferenzteilnehmern nur schwerlich möglich machen. Darüber hinaus sind die Referenzpunkte durch die geringe Auflösung im überlagerten Video erkennbar, da die Maske nur an diesen Positionen an das Gesicht des Schauspielers angepasst wird.

Werden herkömmliche Punkte bei den Schauspielern aufgeklebt, können diese Punkte in zwei Aufnahmen aus verschiedenen Blickwinkeln gesucht werden. Aus dem Unterschied der Blickrichtung des gleichen Punktes und den Standorten der Kameras wird die 3D-Tiefe des Punktes ermittelt. Die Position der aufgeklebten Punkte im Raum steuert eine Computeranimation eines 3D-Meshes. Die Animation wird dann nur auf Basis der wenigen Punkte gesteuert und interpoliert. Ein lebensechtes Modell ist dadurch aufgrund der geringen Auflösung des 3D-Meshes bzw. der geringen Punktdichte nicht möglich.

WO2013167901 (A1) bezieht sich auf eine Technik zum Mischen oder Zusammenstellen von computergenerierten 3D-Objekten in Echtzeit und eines Video-Feed von einer Filmkamera, bei dem die Filmkamera in 3D bewegt werden kann und bei der Sensoren, die in der Kamera oder an dieser angebracht sind, Echtzeit-Positionsdaten liefern, die eine 3D-Position und 3D-Ausrichtung der Kamera definieren oder es ermöglichen die 3D-Position zu berechnen.

Der Wikipedia-Artikel XP055338471 "Photogrammetry" beschreibt Messmethoden, um unter Verwendung von Fotografien Messungen an Objekten vorzunehmen, um 3D-koordinaten zu ermitteln.

US 2010271368 A1 beschreibt eine Technik zum Anwenden eines 3D-Scans eines physischen Zielobjekts auf eine virtuelle Umgebung. Ein 3D-Scan eines Kopfes einer Person oder eines Teils davon wird auf einen virtuellen Körper in einer virtuellen Umgebung angewendet. Dies wird verwendet, um virtuellen Charakteren in einer Videospielumgebung realistische Gesichter und Gesichtsausdrücke zu geben. Ein Hybridansatz, der eine Oberflächenanalyse zur Erzeugung eines 3D-Scans und eine herkömmliche Motion-Capture-Technik zur Bereitstellung eines räumlichen Kontexts zur Zuordnung zum 3D-Scan umfasst, wird verwendet.

Der vorliegenden Erfindung liegt somit die Aufgabe zugrunde, ein verbessertes Konzept zur Überlagerung von Objekten in einem 3D-Bild mit einer virtuellen Oberfläche zu schaffen.

Diese Aufgabe wird durch den Gegenstand der unabhängigen Patentansprüche gelöst. Erfindungsgemäße Weiterbildungen werden in den Unteransprüchen definiert.

Ausführungsbeispiele zeigen eine Vorrichtung zur Überlagerung zumindest eines Teils eines Objekts mit einer virtuellen Oberfläche. Die Vorrichtung umfasst einen (kontaktlosen) Positionsbestimmer, der ausgebildet ist, eine absolute Position eines Referenzpunkts an dem Objekt in einer Umgebung zu bestimmen. Ferner umfasst die Vorrichtung eine Recheneinheit, die basierend auf der absoluten Position des Referenzpunkts eine Tiefeninformation von einer Mehrzahl von Voxeln oder Vertices in einem 3D-Bild des Objekts bestimmt, eine 3D-Gitterstruktur des Objekts erzeugt und die virtuelle Oberfläche der 3D-Gitterstruktur überlagert.

Der vorliegenden Erfindung liegt die Idee zugrunde, ein Objekt, das in 3D aufgenommen wird, mit einem separaten Positionsbestimmer zu orten, der es ermöglicht, die Position des Objekts absolut (und nicht nur relativ zu den aufnehmenden Kameras) in seiner Umgebung zu bestimmen. Diese Positionsbestimmung ist vorteilhaft, da für die Ausrichtung der Überlagerungsbilddaten Referenzpunkte herangezogen werden, deren Position durch den Positionsbestimmer im Sub-Millimeterbereich bestimmt werden kann. Ferner sind (Stereo-)Kameras, die 3D-Aufnahmen anfertigen können, in der Lage, Tiefeninformationen von Pixeln relativ zur Kamera zu bestimmen. Die Kombination des absoluten Positionswerts des globalen Referenzpunkts kann nun mit dem relativen Positionswert, der durch die Kameras erhalten wird, verglichen werden und basierend auf diesem Vergleich können absolute Tiefeninformationen für jeden weiteren Referenzpunkt, z. B. jedes Voxel oder jedes Vertex des aufgenommenen 3D Bilds bestimmt werden. Es wird demnach für die Überlagerung mit der virtuellen Oberfläche eine 3D-Gitterstruktur in maximal möglicher Auflösung geschaffen, über die die virtuelle Oberfläche oder eine Textur derselben gelegt werden kann. Somit ist es möglich, auch sehr detaillierte Oberflächeninformationen der virtuellen Oberfläche nach der Überlagerung herauszuarbeiten.

Gemäß Ausführungsbeispielen kann die Recheneinheit neben der 3D-Gitterstruktur des Objekts auch eine 3D-Gitterstruktur der virtuellen Oberfläche berechnen. Die 3D-Gitterstruktur des Objekts kann nun an die 3D-Gitterstruktur der virtuellen Oberfläche angepasst werden, um die angepasste 3D-Gitterstruktur mit einer Textur der virtuellen Oberfläche zu überlagern. Um diesen Schritt für die mehrmalige Anwendung zu vereinfachen, kann eine Differenzgitterstruktur aus der 3D-Gitterstruktur des Objekts und der 3D-Gitterstruktur der virtuellen Oberfläche ermittelt werden, die dann auf die 3D-Gitterstruktur des Objekts angewendet wird. In Ausführungsbeispielen, die eine Abfolge von 3D-Bildern zeigen, in derselben das Objekt mit der virtuellen Oberfläche überlagert werden soll, kann die Differenzgitterstruktur abhängig von einer Änderung der Referenzpunkte des Objekts in der 3D-Gitterstruktur, mit der die Differenzgitterstruktur berechnet wurde und der 3D-Gitterstruktur des Objekts aus dem aktuellen Bild angepasst werden, um eine Bewegung in dem Objekt auf die virtuelle Oberfläche zu übertragen. Dies ist vorteilhaft, da somit bei einer bestehenden Differenzgitterstruktur, die beispielsweise aus einer Initialaufnahme des Objekts und der virtuellen Oberfläche erhalten worden ist, ausschließlich die Änderung bzw. die Differenz der Position von Referenzpunkten (z. B. jedes Voxel oder jedes Vertex) zu der Initialaufnahme bestimmt werden kann und die Differenzgitterstruktur gemäß der bestimmten Abweichung angepasst bzw. verzerrt wird. Somit ist es möglich, die Mimik oder Gestik der Person mit minimalen Rechenaufwand auf die virtuelle Oberfläche zu übertragen.

Zur Aufnahme des 3D-Bilds oder der Abfolge von 3D-Bildern können zwei gleichartige Kameras verwendet werden, die jeweils ein Bild des Objekts aus zwei sich voneinander unterscheidenden Blickwinkeln auf das Objekt aufnehmen. Die Recheneinheit kann aus den aufgenommenen Bildern ein 3D-Bild erzeugen und die Tiefeninformation der Mehrzahl von Voxeln oder Vertices in dem 3D-Bild relativ zu einer Position der zwei Kameras bestimmen. Ein Abgleich der relativen Tiefeninformation des Referenzpunkts mit der absoluten Position des Referenzpunkts, die von dem Positionsbestimmer erhalten wird, ermöglicht basierend auf der relativen Tiefeninformation der Voxel oder Vertices eine absolute Tiefeninformation der Voxel oder Vertices zu berechnen. Dies ist vorteilhaft, da somit in einer zentralen Recheneinheit, die in Ausführungsbeispielen auch in zumindest einer der beiden Kameras integriert sein kann, das 3D-Rendering sowie die Bestimmung der absoluten Tiefeninformation der Voxel oder Vertices sowie die Überlagerung mit der virtuellen Oberfläche berechnet werden kann. In Ausführungsbeispielen, in denen die Recheneinheit in zumindest einer der beiden Kameras integriert ist, wird das mit der virtuellen Oberfläche überlagerte 3D-Bild direkt von der Kamera ausgegeben. Da die Überlagerung in Echtzeit erfolgen kann, ist beispielsweise ein Regisseur eines 3D-Films, in dem z.B. Gesichter der Schauspieler mit virtuellen Gesichtern überlagert werden, in der Lage, die gespielte Szene in Echtzeit, das heißt ohne sichtbare zeitlichen Verzögerung zu den Handlungen der Schauspieler und ohne die Szene vorher aufzunehmen und zu bearbeiten, direkt aus der Kamera auf einem Monitor anzusehen und die Szene als Ganzes zu beurteilen.

Weitere Ausführungsbeispiele zeigen, dass die Recheneinheit eine kombinierte Oberfläche formen kann, bei der ein Teil des Objekts, der von der Überlagerung mit der virtuellen Oberfläche ausgenommen ist, einen realen Oberflächenbereich des Objekts aufweist. Somit können beispielsweise die vorher genannten überlagerten Gesichter der Schauspieler den echten Mund oder die echten Augen des Schauspielers zeigen, während das restliche Gesicht von einer Maske bzw. der virtuellen Oberfläche verdeckt ist. Hierfür können die ausgesparten Gesichtspartien des Schauspielers auch an die passende Stelle der Maske verschoben werden, wenn beispielsweise der Mund oder die Augenpartie der Maske und des Schauspielers nicht deckungsgleich übereinander liegen.

Gemäß Ausführungsbeispielen kann an dem Objekt neben dem natürlichen Referenzpunkt, der im Gesicht einer Person z. B. die Nasenspitze sein kann, weitere, externe Referenzmarker an dem Objekt angebracht werden. Diese externen Referenzmarker oder Referenzpunkte ermöglichen, die Position des Objekts mit einer besseren Genauigkeit zu bestimmen, wenn beispielsweise diffuses Licht oder eine schwache Beleuchtung vorliegt. Sie bieten somit einen weiteren Orientierungspunkt für die Kameras bzw. den Überlagerungsalgorithmus.

Gemäß weiteren Ausführungsbeispielen können zumindest drei Schallquellen an dem Objekt angebracht sein, die jeweils ein eindeutiges Audiosignal aussenden, das sich von den jeweils anderen Schallquellen unterscheidet. Der Positionsbestimmer ist ferner mit Empfängern verbunden, die in sich unterscheidenden Winkeln um das Objekt angeordnet sind und die Audiosignale empfangen. Der Positionsbestimmer wertet Laufzeitinformationen der drei Audiosignale aus, um basierend auf der Laufzeitinformation eine Position und eine Ausrichtung des Referenzpunkts in der Umgebung zu berechnen. So kann beispielsweise Radar, Sonar oder Ultraschall verwendet werden, um eine extrem genaue Position des Referenzpunkts in der Umgebung zu bestimmen und ferner eine Ausrichtung des Referenzpunkts zu bestimmen. In anderen Worten kann ausgehend von dem Referenzpunkt ein (Einheits-)Vektor berechnet werden, der Position und Orientierung des Referenzpunkts basierend auf einer initial festgelegten Richtung bestimmt. Eine maximale Abweichung der Position des Objekts kann zwischen (±) 5 mm und 10 µm liegen.

Bevorzugte Ausführungsbeispiele der vorliegenden Anmeldung werden nachfolgend Bezug nehmend auf die beiliegenden Zeichnungen näher erläutert. Es zeigen:
- Fig. 1: eine schematische Blockdarstellung der Vorrichtung;
- Fig. 2: eine schematische Darstellung der Überlagerung eines Mundes einer Person mit der virtuellen Oberfläche eines computergenerierten Mundes;
- Fig. 3: eine schematische Anordnung der Vorrichtung gemäß einem Ausführungsbeispiel;
- Fig. 4: eine schematische Darstellung einer Relation zwischen einem absoluten Koordinatensystem und einem relativen Koordinatensystem, das z. B. auf eine Position von einer oder einer Mehrzahl von Kameras bezogen ist;
- Fig. 5: zeigt ein schematisches Flussdiagramm eines Verfahrens zur Überlagerung eines Objekts mit einer virtuellen Oberfläche.

In der nachfolgenden Beschreibung der Figuren werden gleiche oder gleichwirkende Elemente mit den gleichen Bezugszeichen versehen, so dass deren Beschreibung in den unterschiedlichen Ausführungsbeispielen untereinander austauschbar ist.

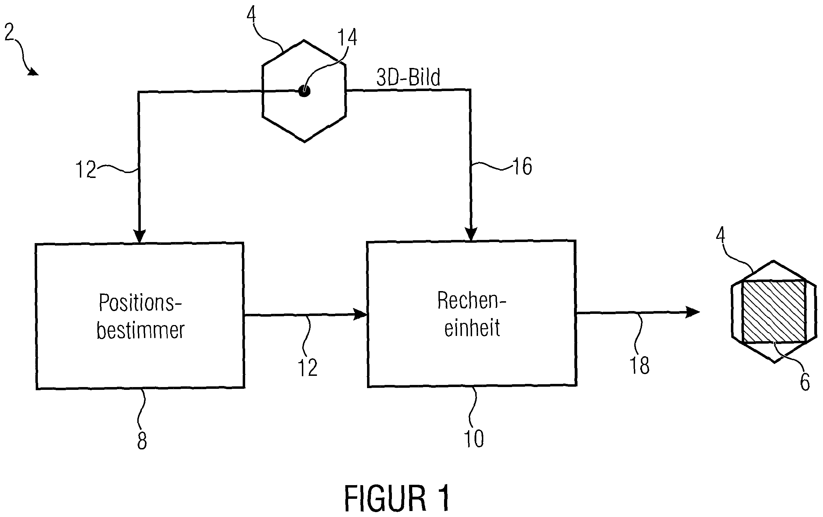

Fig. 1 zeigt eine schematische Darstellung der Vorrichtung 2 zur Überlagerung zumindest eines Teils eines Objekts 4 mit einer virtuellen Oberfläche 6. Die Vorrichtung 2 weist einen Positionsbestimmer 8 sowie eine Recheneinheit 10 auf. Der Positionsbestimmer 8 ist ausgebildet, eine absolute Position 12 eines Referenzpunkts 14 an dem Objekt 4 in einer Umgebung zu bestimmen. Ferner ist die Recheneinheit 10 ausgebildet, basierend auf der absoluten Position 12 des Referenzpunkts 14 eine Tiefeninformation von einer Mehrzahl von Voxeln oder Vertices in einem 3D-Bild 16 des Objekts 4 zu bestimmen und eine 3D-Gitterstruktur des Objekts 4 zu erzeugen und die virtuelle Oberfläche 6 der 3D-Gitterstruktur zu überlagern. Das 3D-Bild des Objekts kann z. B. von zwei Kameras aufgenommen werden, deren Einzelbilder von dem Objekt zu einem 3D-Bild zusammengefügt werden. In dem in Fig. 1 gezeigten Ausführungsbeispiel wird das Objekt 4, hier ein Sechseck zu einem Teil mit der virtuellen Oberfläche 6, hier ein Quadrat, überlagert. Die Recheneinheit 10 gibt ein 2D- oder ein 3D-Bild 18 des Objekts 4 aus, das mit der virtuellen Oberfläche 6 überlagert ist.

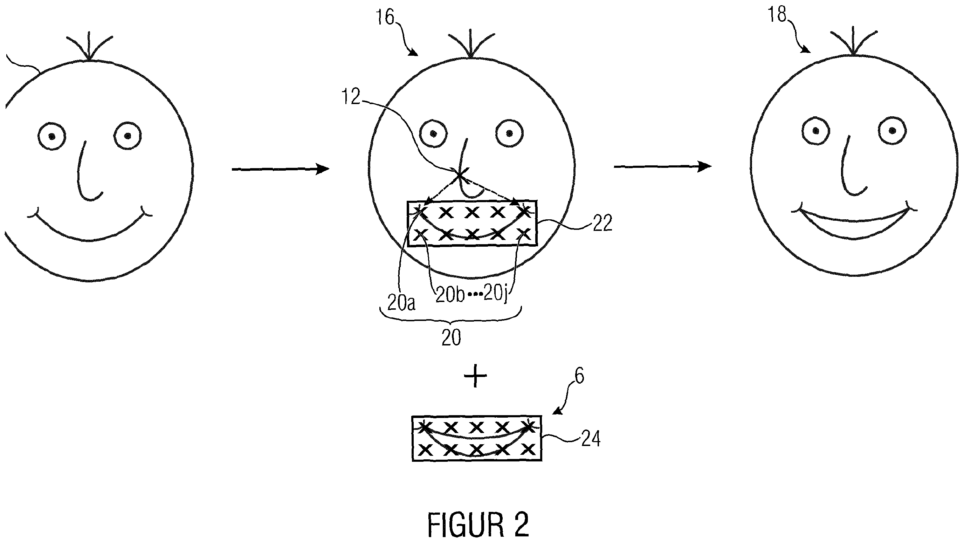

Fig. 2 zeigt eine schematische Darstellung des Objekts 4, hier beispielhaft dem Gesicht einer Person, bei dem der Mund der Person mit der virtuellen Oberfläche 6, hier beispielhaft einem computergenerierten Mund, überlagert wird. Von dem Objekt 4 wird z. B. mittels Kameras das 3D-Bild 16 erzeugt. In dem 3D-Bild 16 verfolgt der Positionsbestimmer einen (natürlichen) Referenzpunkt 12 an dem Objekt, hier die Nasenspitze der Person. Die Recheneinheit errechnet nun basierend auf der absoluten Position des Referenzpunkts 12 eine Tiefeninformation von einer Mehrzahl von Voxeln oder Vertices 20 in dem 3D-Bild 16, hier im Bereich des Mundes der Person. Aus den Voxeln oder Vertices 20 und der zugehörigen Tiefeninformation wird eine 3D-Gitterstruktur 22 des Objekts, hier nur der Mund der Person, der überlagert werden soll, erzeugt. Der 3D-Gitterstruktur 22 wird die virtuelle Oberfläche 6 überlagert, um das Ausgangsbild 18 zu erhalten. Das Ausgangsbild 18 kann je nach Endgerät, auf dem das Ausgangsbild dargestellt werden soll, in 2D oder in 3D vorliegen oder ein 2D-Endgerät kann eine zweidimensionale Abbildung des 3D-Ausgangbilds berechnen.

Gemäß Ausführungsbeispielen ist die Recheneinheit ausgebildet, eine 3D-Gitterstruktur 24 der virtuellen Oberfläche 6 zu berechnen. Die 3D-Gitterstruktur 22 des Objekts 4 kann nunmehr an die 3D-Gitterstruktur 24 der virtuellen Oberfläche 6 angepasst werden, um eine angepasste 3D-Gitterstruktur zu erhalten und eine Textur der virtuellen Oberfläche 6 der angepassten 3D-Gitterstruktur zu überlagern. In anderen Worten kann die virtuelle Oberfläche in eine 3D-Gitterstruktur (Mesh), die die Form der virtuellen Oberfläche beschreibt und die Textur der virtuellen Oberfläche, also das optische Erscheinungsbild aufgeteilt werden. Somit kann die virtuelle Oberfläche an das Objekt angepasst werden, so dass der Eindruck eines nahtlosen Übergangs von der überlagerten Oberfläche zu dem Gesicht der Person entsteht. Hierfür ist es vorteilhaft, auch angrenzende Voxel, die nicht zur 3D-Gitterstruktur 22 gehören, beispielsweise mittels einer Interpolation anzupassen, so dass ein gradueller Übergang zwischen den Tiefeninformationen der Voxel im Gesicht der Person und den Voxeln der virtuellen Oberfläche angepasst wird.

Gemäß einem weiteren Ausführungsbeispiel kann die Überlagerung der 3D-Gitterstruktur mit der virtuellen Oberfläche mittels einer Differenzgitterstruktur erfolgen. Die Differenzgitterstruktur kann mit der Recheneinheit aus der 3D-Gitterstruktur des Objekts und der 3D-Gitterstruktur der virtuellen Oberfläche ermittelt werden. Anschließend kann die Differenzgitterstruktur auf die 3D-Gitterstruktur des Objekts angewendet werden, um die 3D-Gitterstruktur des Objekts an die 3D-Gitterstruktur der virtuellen Oberfläche anzupassen und die angepasste 3D-Gitterstruktur zu erhalten. Die Anwendung der Differenzgitterstruktur auf die 3D-Gitterstruktur des Objekts kann beispielsweise mittels einer punktweisen, das heißt Voxel-weisen oder Vertex-weisen Addition erfolgen, wenn die Differenzmaske z. B. aus der Differenz der 3D-Gitterstruktur des Objekts und der 3D-Gitterstruktur der virtuellen Oberfläche erzeugt wurde. Vorteilhafterweise kann die Berechnung der 3D-Gitterstruktur initial bzw. einmalig basierend auf einem 3D-Modell des Objekts und der virtuellen Oberfläche für jeden Punkt, das heißt z.B. Voxel oder Vertex oder jeden gewählten Referenzpunkt des Objekts und der virtuellen Oberfläche in einer 360° Rundumsicht erzeugt werden. In anderen Worten kann jeweils für das Objekt und die virtuelle Oberfläche eine 3D-Gitterstruktur aus einer 360° Rundumsicht auf das Objekt und die virtuelle Oberfläche erstellt werden, so dass die Differenzgitterstruktur z. B. basierend auf einer Voxel-weisen, Vertex-weisen oder allgemein Referenzpunkt-weisen Subtrahierung der 3D-Gitterstruktur der virtuellen Oberfläche und der 3D-Gitterstruktur des Objekts erstellt werden kann.

Liegt nun eine Abfolge von 3D-Bildern oder ein Video des Objekts vor, so kann die Differenzgitterstruktur angepasst werden, um eine Bewegung in dem Objekt auf die virtuelle Oberfläche zu übertragen. Hierfür kann die Recheneinheit einen Anpassungswert basierend auf einer relativen Abweichung der 3D-Gitterstruktur des Objekts in einem aktuellen 3D-Bild von der 3D-Gitterstruktur des Objekts, mit der die Differenzgitterstruktur erzeugt ist, berechnen. In anderen Worten kann eine Differenz eines Meshes von dem Objekt in dem aktuellen 3D-Bild (aus der Abfolge von 3D-Bildern oder dem aktuellen 3D-Videoframe) zumindest für die sichtbaren Voxel bzw. Vertices von den zugehörigen Voxeln oder Vertices des Meshes des initialen 3D-Modells berechnet werden. Basierend auf diesen ermittelten Abweichungen zwischen der aktuellen 3D-Gitterstruktur und der initialen 3D-Gitterstruktur kann die Differenzgitterstruktur, beispielsweise wieder durch eine Vertex-weise oder Voxel-weise Addition angepasst werden, um eine (innere) Bewegung des Objekts, beispielsweise eine veränderte Mimik, auf die virtuelle Oberfläche zu übertragen. Dies geschieht durch Überlagern der finalen 3D-Gitterstruktur mit der Textur der virtuellen Oberfläche, wobei die Textur an die finale 3D-Gitterstruktur angepasst wird.

So werden beispielsweise Referenzpunkte im Gesicht einer Person, die z. B. eine Position eines Augenlids oder einen Mundöffnungswinkel beschreiben, verfolgt bzw. getrackt, um z. B. ein Zwinkern oder ein Sprechen der Person auch auf die überlagerte Maske zu übertragen. Andere, vorzugsweise unveränderliche Referenzpunkte, wie z. B. die Nasenspitze oder die Ohrläppchen können zur Bestimmung einer Blickrichtung der Person herangezogen werden, so dass die virtuelle Oberfläche bzw. die Maske, die dem Gesicht der Person überlagert wird, auch perspektivisch an den Blickwinkel der Person bzw. des Schauspielers angepasst werden kann. Dies erfolgt im einfachsten Fall durch die Auswahl des entsprechenden, sichtbaren Ausschnitts der Differenzgitterstruktur, sofern diese aus initialen 360° 3D-Modellen des Objekts und der virtuellen Oberfläche angefertigt wurde. Wie bereits implizit erwähnt, kann die 3D-Gitterstruktur eine beliebige Auflösung annehmen bzw. erreichen. Werden hochdetaillierte Aufnahmen gefordert, kann jedes Voxel oder Vertex des Objekts ein Gitterelement der 3D-Gitterstruktur bilden.

In einem bevorzugten Ausführungsbeispiel ist die Recheneinheit ausgebildet, eine Person als Objekt mit einer virtuellen Person als virtuelle Oberfläche oder ein Gesicht einer Person als Objekt mit einem virtuellen Gesicht als virtuelle Oberfläche zu überlagern, wobei eine Mimik oder Gestik der Person durch die Überlagerung der 3D-Gitterstruktur der virtuellen Oberfläche erhalten bleibt.

Gemäß Ausführungsbeispielen kann die Recheneinheit ebenfalls ausgebildet sein, eine kombinierte Oberfläche zu formen, wobei ein Teil des Objekts, der von der Überlagerung mit der virtuellen Oberfläche ausgenommen ist, einen realen Oberflächenbereich des Objekts aufweist. So kann beispielsweise ein Teil des Gesichts der Person, z. B. der Mund, die Augen, die Nase oder die Ohren von der Überlagerung mit dem virtuellen Gesicht bzw. der Maske ausgenommen werden, so dass an dieser Stelle der reale Teil des Gesichts des Schauspielers zu erkennen ist. Es kann jedoch auch erforderlich sein, beispielsweise den Mund oder die Augen des Schauspielers an der zugehörigen Stelle der Maske darzustellen, obwohl die Gesichtsproportionen der Person und der Maske nicht deckungsgleich sind und somit der Mund der Maske, also der virtuellen Oberfläche, an einer anderen Stelle liegt als der Mund der Person bzw. des Schauspielers. So kann der reale Mundbereich des Schauspielers aus dem aktuellen 3D-Bild ausgeschnitten werden und an der dafür vorgesehenen Stelle der Maske eingefügt werden.

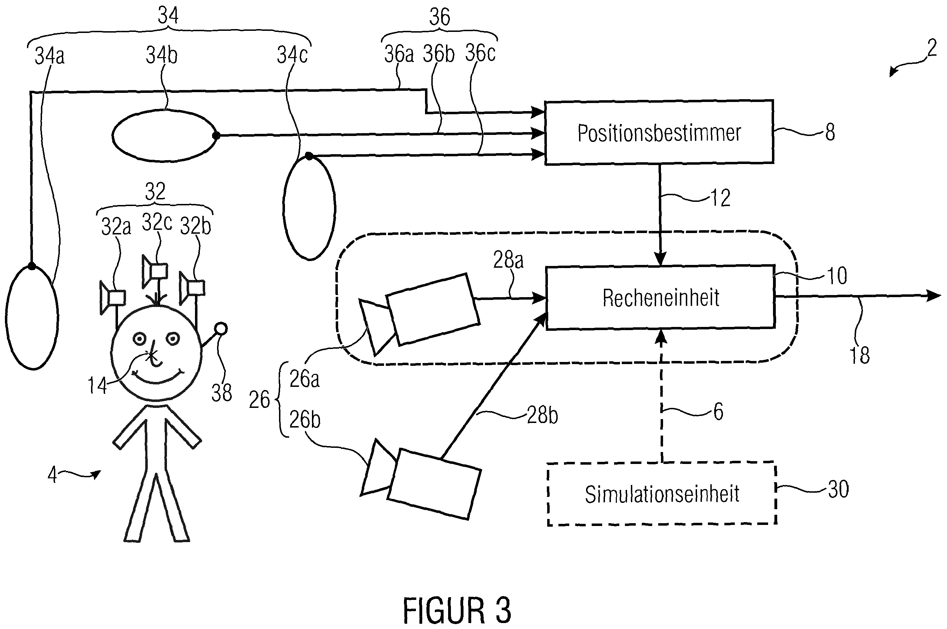

Fig. 3 zeigt eine schematische Darstellung der Vorrichtung 4 in einer Blockdarstellung mit einigen optionalen Merkmalen, die in unterschiedlichen Ausführungsbeispielen oder in Kombination realisierbar sind. So weist die Vorrichtung 4 in Ausführungsbeispielen zwei gleichartige Kameras 26a, 26b auf, die ausgebildet sind, jeweils ein Bild 28a, 28b des Objekts 4 aus zwei sich voneinander unterscheidenden Blickwinkeln auf das Objekt aufzunehmen. Die Recheneinheit 10 ist ferner ausgebildet, aus den Bildern der zwei Kameras 26a, 26b das 3D-Bild zu erzeugen, die Tiefeninformation der Mehrzahl von Voxeln oder Vertices in dem 3D-Bild relativ zu einer Position der zwei Kameras zu bestimmen und die relative Tiefeninformation des Referenzpunkts 14 mit der aktuellen (absoluten) Position (oder der aus der Position abgeleiteten absoluten Tiefeninformation) des Referenzpunkts zu vergleichen, um basierend auf der relativen Tiefeninformation der Voxel oder Vertices eine absolute Tiefeninformation der Voxel oder Vertices zu erhalten. In anderen Worten bestimmt die Recheneinheit 10 aus den Bildern der 2D-Kameras 26a, 26b ein 3D-Bild des Objekts 4. Basierend auf der absoluten Position 12 des Referenzpunkts 14 kann die Überlagerung des Objekts 4 in dem 3D-Bild mit der virtuellen Oberfläche 6 von der Recheneinheit ausgeführt und das Ausgangsbild 18 erzeugt werden.

Die virtuelle Oberfläche 6 kann in Ausführungsbeispielen von einer Simulationseinheit 30 bereitgestellt werden, die ausgebildet ist, ein 360° 3D-Modell der virtuellen Oberfläche zu erzeugen. Die Recheneinheit 10 ist ferner ausgebildet, dem Objekt einen Ausschnitt der virtuellen Oberfläche, abhängig von einem Blickwinkel eines Anwenders, der das Ausgangsbild 18 betrachtet oder einen Blickwinkel der Kamera 26 auf das Objekt, zu überlagern. Die Simulationseinheit 30 ist optional Teil der Vorrichtung 2. Die virtuelle Oberfläche kann auch aus einer anderen Quelle, beispielsweise einem ausschließlich computergenerierten Modell der virtuellen Oberfläche ohne explizite reale Vorlage berechnet oder erstellt werden. Die für den Überlagerungsprozess vorteilhafte Aufteilung der virtuellen Oberfläche in die 3D-Gitterstruktur sowie die Textur der virtuellen Oberfläche kann in der Recheneinheit oder der Simulationseinheit ausgeführt werden. Im Falle eines computergenerierten Modells können die Textur und das 3D-Gitter auch separat bereitgestellt werden.

Gemäß Ausführungsbeispielen können an dem Objekt 4 zumindest drei Schallquellen 32a, 32b, 32c angebracht sein, wobei jede der drei Schallquellen 32a, 32b, 32c ausgebildet ist, ein Audiosignal auszusenden, das sich von dem Audiosignal der jeweils anderen Schallquellen unterscheidet. Der Positionsbestimmer 8 kann ferner mit Empfängern 34 verbunden sein, die in sich unterscheidenden Winkeln um das Objekt 4 angeordnet sind und die Audiosignale empfangen. Aus den empfangenen Audiosignalen 36 kann der Positionsbestimmer eine Laufzeitinformation der Audiosignale von den Schallquellen zu den Empfängern bestimmen und basierend auf der Laufzeitinformation eine Position und eine Ausrichtung des Referenzpunkts 14 in der Umgebung berechnen. Somit kann der Positionsbestimmer ausgehend von dem Referenzpunkt 14 einen Vektor bestimmen, der eine Richtung aufweist, die im Vergleich zu einer Initial- oder Ursprungsrichtung des Vektors eine Ausrichtung des Objekts bzw. des Referenzpunkts beschreibt. Alternativ oder ergänzend zu den in Fig. 3 gezeigten Schallquellen 32 (z. B. Lautsprecher), die Sonar, Radar oder Ultraschall nutzen können, können auch weitere Signalquellen 32 wie z.B. GPS-Sender, RFID-Tags, Laser oder Reflektoren für Laserstrahlung an dem Objekt angebracht sein. Die vorigen Ausführungen gelten entsprechend für diese weiteren Signalquellen 32. Vorteilhafterweise sind diese derart angeordnet, beispielsweise am Hinterkopf der aufgenommenen Person wenn das Gesicht einer Person überwiegend von vorne gezeigt wird, so dass diese für die Kameras nicht sichtbar sind. Dies reduziert den Einsatz von Bildbearbeitungsalgorithmen, um die Schallquellen zu retuschieren. Die Empfänger 34 sind vorteilhafterweise auf die Art der Signalquellen 32 abgestimmt, so dass diese die Signale empfangen können und der Positionsbestimmer eine Laufzeit anhand der empfangenen Signale bestimmt.

Wenn das Objekt eine Person (bzw. das Gesicht der Person ) ist, ist der Positionsbestimmer somit in der Lage, die absolute Position des Referenzpunkts mittels Signalquellen 32 (oder Reflektoren, die Signale von Signalquellen reflektieren) und Empfängern 34, zu bestimmen. Die Signalquellen (oder Reflektoren) können außerhalb des Gesichts, also z. B. am Hinterkopf oder in den Haaren der Person angeordnet sein. Die Empfänger sind ferner mit dem Positionsbestimmer 8 verbunden. Somit kann der Empfänger eine Laufzeit der Signale von den Signalquellen zu den Empfängern ermitteln und die absolute Position des Referenzpunkts im Raum bestimmen. Hierzu ist es vorteilhaft, wenn die räumliche Anordnung der Signalquellen zu dem Referenzpunkt bekannt ist, da der Positionsbestimmer nur die Position der (außerhalb des Gesichts der Person angeordneten) Signalquellen bzw. Reflektoren direkt bestimmen kann und die Position des Referenzpunkts basierend auf der räumlichen Anordnung der Signalquellen (bzw. Reflektoren) zu dem Referenzpunkt bestimmt werden kann. Die Reflektoren können z. B. Laserstrahlen oder Licht im sichtbaren oder unsichtbaren Frequenzspektrum reflektieren. Die Signalquellen können hierzu, wenn an dem Objekt bzw. der Person entsprechende Reflektoren angebracht sind, räumlich beabstandet von dem Objekt angeordnet sein.

Es ist anzumerken, dass es sich bei dem Referenzpunkt vorteilhafterweise um einen einzigen festen Punkt an dem Objekt handeln kann. Auch die in Fig. 3 gezeigten Ausführungsbeispiele mit mehreren Sendern und Empfängern messen zwar die Positionen der einzelnen Sender bzw. Empfänger am Objekt, Dies erlaubt das echtzeitfähige Tracking bzw. die echtzeitfähige Positionsbestimmung des Objekts, da eine solche Positionsbestimmung eines Punkts schneller und präziser durchgeführt werden kann als beispielsweise mittels Anordnungen, die zwei bildgebende Verfahren (also z. B. zwei unterschiedliche Kamerasysteme) verwenden und somit nicht nur (genau) einen Referenzpunkt verfolgen bzw. orten, sondern beispielsweise das Gesicht einer Person mit beiden verschiedenen Kamerasystemen aufnehmen und diese Aufnahmen miteinander kombinieren (bzw. Informationen aus einer Aufnahme verwenden um die zweite Aufnahme zu verbessern). Somit ist es beispielsweise mittels der beschriebenen Positionsbestimmer (bzw. Verfahren zur Positionsbestimmung, vgl. z. B. Fig. 3) möglich, Interaktionen zwischen den Objekten (z. B. wenn dies Personen sind) beispielsweise in einem virtuellen Konferenzraum ohne sichtbare Verzögerung darzustellen.

Ergänzend oder alternativ kann die Recheneinheit die Tiefeninformation anhand von stereoskopischen Bildern einer stereoskopischen Kamera bestimmen, wobei der Positionsbestimmer ausgebildet ist, die absolute Position des Referenzpunkts basierend auf Signalquellen oder Reflektoren an dem Objekt zu bestimmen, wobei die Signalquellen für die stereoskopischen Kameras nicht sichtbar (bzw. unsichtbar oder versteckt) angeordnet sind. Jedoch kann es ausreichend sein, dass durch die Signalquellen oder die Reflektoren das Objekt von dem die 3D Gitterstruktur erzeugt wird, aus dem Blickwinkel der Kameras nicht von den Signalquellen oder den Reflektoren verdeckt wird. Hieraus folgt, dass die Signalquellen oder die Reflektoren außerhalb des Gesichts (z. B. am Hinterkopf einer Person) angeordnet werden können, wenn die 3D Gitterstruktur von dem Gesicht der Person erzeugt wird. Somit verdecken keine Signalquellen oder Reflektoren das Gesicht der Person, das mit der virtuellen Oberfläche überlagert wird.

In anderen Worten können die stereoskopischen Kameras das Objekt aus einem Blickwinkel auf das Objekt gerichtet sein. Basierend auf den stereoskopischen Bildern kann die 3D-Gitterstruktur aus dem Blickwinkel von dem Objekt erzeugt werden. Abseits bzw. räumlich beabstandet von dem Teil des Objekts, das aus dem Blickwinkel sichtbar ist, können dann die Signalquellen bzw. die Reflektoren angeordnet werden, so dass die Signalquellen oder Reflektoren eine Überlagerung des Objekts aus dem Blickwinkel der stereoskopischen Kameras vermeiden. Für die Erstellung der 3D-Gitterstruktur brauchen die Signalquellen oder Reflektoren dann nicht aus dem (stereoskopischen) Kamerabild herausgerechnet werden. Am Beispiel des Gesichts können die Signalquellen oder Reflektoren somit beispielsweise neben oder über dem Kopf für die Kameras sichtbar sein, sie verdecken jedoch nicht das Gesicht.

Bei dem beschrieben Verfahren ist der Positionsbestimmer in der Lage, die Position des Referenzpunkts 14 mit einer maximalen Abweichung zwischen 5 mm und 10 µm, zwischen 1 mm und 1 µm oder vorteilhafterweise zwischen 0,5 mm und 0,1 mm zu bestimmen. Somit ist es möglich, unter Verwendung von Schallquellen, GPS, RFID und/oder Laserabtastung eine absolute Position eines Objekts oder eines Referenzpunkts an dem Objekt in einer Umgebung des Objekts zur Ausrichtung von Bildern einer 3D-Kamera zu bestimmen, um eine Tiefeninformation für eine 3D-Aufnahme des Objekts zu erhalten. Eine Tiefeninformation ist beispielsweise der absolute Abstand des Objekts oder des Referenzpunkts zu den Kameras. Die Kameras sind nur in der Lage, Tiefeninformationen von Pixeln im Vergleich zu einem anderen Pixel zu ermitteln, nicht jedoch den absoluten Abstand des Punkts zur Kamera.

Gemäß weiteren Ausführungsbeispielen kann der Positionsbestimmung ausgebildet sein, die absolute Position des Referenzpunkts 14 anhand eines natürlichen Referenzpunkts, beispielsweise der Nasenspitze einer Person, der von dem Objekt vorgegeben wird, und anhand eines externen Referenzpunkts 38, beispielsweise einem Marker oder reflektierenden Balls, der an dem Objekt angebracht ist, zu bestimmen, um eine Positionsbestimmung mit einer verbesserten Genauigkeit zu erhalten. Dies kann z. B. bei schlechten Lichtverhältnissen vorteilhaft sein.

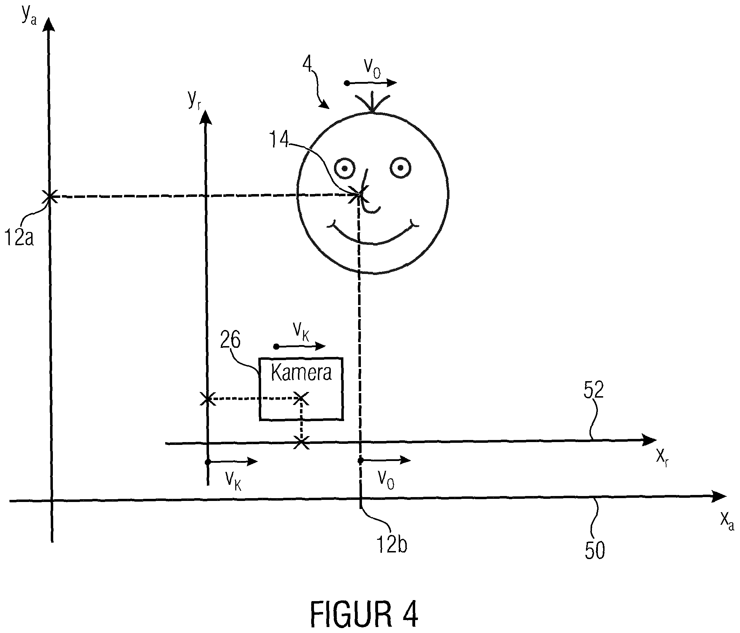

Fig. 4 zeigt schematisch eine Relation zwischen einem Absolutkoordinatensystem 50 und einem Relativkoordinatensystem 52. Das Absolutkoordinatensystem wird durch den Positionsbestimmer 8 festgelegt. Bewegungen des Referenzpunkts 14 erfasst der Positionsbestimmer absolut in dem Koordinatensystem 50. Eine Bewegung v_{O} des Objekts bzw. genauer des Referenzpunkts in x-Richtung resultiert in einer Änderung der x-Position 12b des Referenzpunkts auf der x-Achse des Absolutkoordinatensystems 50. Die Position 12 des Referenzpunkts wird hier vereinfacht in zwei Dimensionen (x, y) dargestellt, wobei ein Positionsvektor 12 aus seinen Komponenten 12a und 12b zusammengesetzt wird. Die zweidimensionale Darstellung ist ferner vereinfacht und kann analog auf drei Dimensionen erweitert werden. Basierend auf einer Position der Kamera(s) 26 kann ein Relativkoordinatensystem 52 festgelegt werden, wobei hier eine Bewegung v_{K} der Kamera(s) in x-Richtung in einer Verschiebung des Korrdinatenssytems 52 resultiert. Somit kann eine absolute Position eines Referenzpunkts am Objekt nicht eindeutig mittels der Kameras bestimmt werden. Jedoch liefert der Positionsbestimmer im Absolutkoordinatensystem sowohl eine absolute Position 12 des Referenzpunkts 14, der mit einer relativen Position im Relativkoordinatensystem 52, die durch die Kameras erhalten wird, verglichen werden kann. Mittels des Vergleichs der Positionen des Referenzpunkts in den beiden Koordinatensystemen kann so eine absolute Position jedes Voxel oder Vertices in einem 3D-Bild berechnet werden. Somit ist zum einen eine Position in dem 3D-Bild, an dem die überlagerte Oberfläche ausgerichtet wird, als auch die Tiefeninformationen jedes Voxel oder Vertex in dem 3D-Bild bekannt, so dass die virtuelle Oberfläche in ihrer Position ausrichtbar und das Objekt an die virtuelle Oberfläche anpassbar ist. Somit können z. B. auch Massenaufnahmen realisiert werden, in denen Objekte wie z. B. Gesichter von Menschen in einer Menschenansammlung zuverlässig mit virtuellen Oberflächen überlagert werden können.

In anderen Worten werden durch die 3D-Kamera-Aufnahme oder ein anderes 3D-Scanning fast beliebig viele 3D-Punkte, z. B. Voxel oder Vertices im Raum erzeugt. Hierdurch kann im Vergleich zu bekannten Techniken ein deutlich höherer Animationsgrad eines Objekts mit virtueller überlagerter Oberfläche erreicht werden, theoretisch bis hin zu jedem einzelnen Pixel bzw. Voxel oder Vertex im Gesicht bzw. dem Objekt. Hierfür wird aus dem 3D-Kamerabild 16 ein Mesh 22 erzeugt, das in einer Abfolge von 3D-Kamerabildern oder einem 3D-Videobild ein animiertes Mesh ist. Aus einem 3D-Mesh-Modell eines Objekts, beispielsweise eines verstorbenen Schauspielers, und dem Mesh-Modell des Objekts aus dem 3D-Kamerabild oder einer live-3D-Tiefenbildserie eines lebenden Menschen können Unterschiede in den Mesh-Gittern berechnet werden. Diese Unterschiede können sich auf eine geänderte Tiefeninformation, d. h. einen veränderten Abstand im Raum z. B. in Bezug zu den aufnehmenden Kameras, berechnet werden.

Ferner können darüber hinaus Referenzpunkte an markanten Stellen an dem Objekt, beispielsweise der Nase oder dem Mund, im Gesicht einer Person markiert werden, so dass über einen Vergleich der Referenzpunkte im Mesh-Modell z. B. eine andere Anatomie, wie z. B. der Abstand zwischen Nasenspitze und Mund, von der virtuellen Oberfläche auf das Gesicht der Person übertragen werden kann. Diese Unterschiede werden gespeichert und das live-3D-Bild 18 mit einem zugehörigen Delta-Wert, der die Unterschiede repräsentiert, angezeigt. Eine (live-)Textur der virtuellen Oberfläche, z. B. das Gesicht eines lebenden Menschen, kann (zur Laufzeit) dergestalt verändert werden, dass die live-Textur verzerrt wird, um die genauen Maße der Maske bzw. der angepassten 3D-Gitterstruktur zu bekommen und die angepasste 3D-Gitterstruktur mit der Textur zu überlagern. In einem weiteren Schritt kann die Textur von Augen und Mund so verzerrt bzw. gemorpht werden, dass diese auf die Geometrie des Objekts bzw. des Schauspielers passen. Um eine schnellere Ortung der Referenzpunkte zu ermöglichen, die beispielsweise nicht über den Positionsbestimmer geortet werden, können diese, um einen höheren Kontrast zu erreichen, beispielsweise geschminkt werden. Hierdurch wird eine übermäßige Verzögerung des Bildverarbeitungssystems, das die Referenzpunkte erkennt, vermieden.

Gegenüber bekannten Verfahren weist die erfindungsgemäße Vorrichtung eine Reihe von Vorteilen auf. So wird für die Aufnahme ausschließlich natürliches Licht gebraucht bzw. verwendet. Eine Infrarot-Beleuchtung des Schauspielers ist nicht notwendig. Ferner kann das 3D-Video mit z. B. 60 Frames pro Sekunde in einer 4K-Auflösung aufgenommen werden, die bereits mit Standardkameras realisierbar sind. Ebenso können normale Objektive verwendet werden. Eine Infrarot-Erkennung der Kameras ist nicht notwendig. Eine Genauigkeit des Verfahrens kann mehr als ein Zehntel Millimeter betragen und bis hin zu einer Auflösung, die der Auflösung des Kamerabilds entspricht, reichen. Ferner ist es bedingt durch die hohe Auflösung und die absolut bestimmte Position des Referenzpunkts auch möglich, in Massenaufnahmen Gesichter von Schauspielern mit sich unterscheidenden Gesicherten anderer Personen sowie weit entfernte und daher kleiner Objekte mit virtuellen Oberflächen zu überlagern.

In nochmals anderen Worten können zumindest zwei Filmkameras in geeignetem Abstand voneinander einen Menschen bzw. einen Schauspieler filmen. Der Mensch kann zunächst in drei Dimensionen vermessen werden, woraus ein 3D-Modell des Kopfes und des vollständigen Menschen angefertigt werden kann, aus dem das 3D-Gittermodell des Objekts bestimmt wird. Als Referenzpunkt für ein Echtzeitvermessungssystem 8 dient im Falle eines Menschen beispielsweise die Nasenspitze des Menschen, von woausgehend das 3-D Modell des Menschen bestimmt werden kann. Das Prinzip ist auch auf andere Objekte übertragbar, wobei passende Referenzpunkte abhängig vom Objekt gewählt werden können. Das Echtzeitvermessungssystem, wie z. B. Nexonar, kann gemäß Ausführungsbeispielen mit Schallwellen funktionieren. Der Vorteil von Schallwellenvermessung bzw. anderen Vermessungssystemen, die eine absolute Position des Referenzpunkts ermitteln können, ist, dass keine Farbänderung oder Bestrahlung im Gesicht oder auf dem Körper des Menschen nötig ist.

So wird aus dem 3D-Modell zu Beginn beispielsweise das Gesicht an markanten Punkten vermessen. Hierbei kann an dem Referenzpunkt, für den eine absolute Position vorliegt, also beispielsweise der Nasenspitze, begonnen werden. Das vom Menschen bzw. Schauspieler generierte 3D-Mesh wird dann zum Referenzpunkt vermessen, in der Form, dass der Abstand bzw. die Position jedes einzelnen Vertex zum Referenzpunkt bestimmt wird. In allen sich nicht verändernden Punkten, wie z. B. der Nasenspitze wird nun der vermessene Vertex als Tiefenwert genommen. Man erhält somit ein sehr genaues Referenzmodell des Menschen, da das 3D-Modell sehr viele Punkte, beispielsweise ca. 140.000 oder mehr bis hin zur Anzahl der im Gesicht der Person vorliegenden Voxel, haben kann. Aus der Lage der beiden Kameras 32a, 32b wird nun ein 3D-Tiefenwertmodell der Aufnahme durch geometrische Berechnung ermittelt. Aus den Unterschieden der beiden Bilder 28a, 28b wird durch geometrische Triangulation und der genauen Position der Kameras 26a, 26b und dem Referenzmodell ein 3D-Wert ermittelt. Dieser 3D-Wert liegt vorteilhafterweise zwischen den vermessenen Punkten des Referenz-3D-Modells. Für jeden Pixel bzw. Voxel oder Vertex der beiden Bildaufnahmen kann somit ein genauer Tiefenwert bestimmt werden, der ausgehend von dem Referenzpunkt aus dem Blickwinkel der Kameras und der Position der Kameras genau ermittelt werden kann. Bei Verdeckungen wird der Wert des Referenzmodells genommen und interpoliert.

Somit kann über die beiden 2D-Kameras nach dem Pattern-Matching-Verfahren jeder Punkt des Meshes in Bezug auf den Referenzpunkt 14 exakt bestimmt werden.

Ergänzend wird eine computergenerierte Maske mit möglichst hoher Genauigkeit, beispielsweise eines verstorbenen Menschen angefertigt, die z. B. über Computergraphik-Tools mit der generierten Maske des Schauspielers in Deckung gebracht wird, um die Maske des verstorbenen Menschen, also die virtuelle Oberfläche, dem Gesicht des Schauspielers zu überlagern. Die zueinander liegenden Meshes der beiden Masken werden z. B. durch Rigging bestimmt, wobei auch die Differenzabstände zwischen den einzelnen Punkten berücksichtigt und hinzugerechnet werden. Das Ergebnis ist, dass die computeranimierte Maske exakt mit der Maske aus dem Gesicht des lebenden Schauspielers korreliert. Dies kann punktgenau, idealerweise auf Pixelebene erfolgen, wobei die festen Abstände in Z-Richtung (Tiefe) anhand der ermittelten Tiefeninformation korrigiert werden. Somit sind beide Masken übereinander gebracht und korreliert.

Beim Filmen verändert sich die Pixelanordnung bei jedem Frame und jeder Bewegung, wobei Kopfbewegungen über den Referenzpunkt des Objekts 4 korrigiert werden können. Dadurch wird die Maske bei jedem Frame verändert, was dazu führt, dass die korrelierte Maske des Menschen bzw. die virtuelle Oberfläche automatisch nachfolgt. Somit kann eine Animation in dem Ausgangsbild 18 erreicht werden.

Auf die korrelierte sich bewegende Maske kann eine über den Computer erstellte Textur gelegt werden, die den Menschen bzw. die virtuelle Oberfläche möglichst hochaufgelöst abbildet. Dadurch wird ein neues Bild erstellt, das 100% lebensecht sein kann, den verstorbenen Menschen bzw. die virtuelle Oberfläche animiert und darstellt.

Zusätzlich besteht die Möglichkeit, auch mit einigen wenigen (externen) Markern 38 zu arbeiten, um evtl. Korrekturen bei schlechten Lichtverhältnissen durchzuführen. Das geschieht dann durch Einsatz weiterer (externer) Referenzpunkte.

Erfindungsgemäße Ausführungsbeispiele zeigen, dass mit der beschriebenen 3D-Engine 3D-Modelle mit Videoaufnahmen in Echtzeit vereint werden können, so dass der animierte Kopf des Menschen bzw. die virtuelle Oberfläche mit den Videoaufnahmen des Körpers des lebenden Schauspielers kombiniert werden kann. Dies kann in einem 2D- oder einem 3D-Ausgangsbild 18 realisiert werden. Dieses resultierende Bild oder Video kann den realen Körper des lebenden Schauspielers mit dem Gesicht des Menschen bzw. der virtuelle Oberfläche zeigen.

Dieses Verfahren der Überlagerung und Mischung von 3D und Video kann auch für nur einzelne Bereiche der Maske angewendet werden, beispielsweise können die Augen des lebenden Schauspielers in das Gesicht des Menschen bzw. die virtuellen Oberfläche eingeblendet werden. Dasselbe gilt für Mund, Zähne und Zunge. Diese Einblendungen können auch in Echtzeit direkt aus den Videobildern der beiden Kameras generiert werden. Augenpartien können durch die Maskenposition ausgeschnitten werden und an einer anderen Stelle der Maske kopiert werden. Der Ausschnitt kann sowohl als 3D-Mesh als auch als Videotextur erfolgen. So hat man den Vorteil, die echten Augenpartien zu sehen. Genauso kann bei der Maske auch der Mund ausgeschnitten werden. Der echte Mund des live-Bildes wird zur Maske hinzugeblendet. Der Mund kann perspektivisch verzerrt werden, um genau auf die Maske des verstorbenen Schauspielers zu passen. Ausführungsbeispiele zeigen ferner, dass die Ausgangsbilder 18 wie bereits beschrieben stereoskopisch oder in 3D erzeugt bzw. ausgegeben werden können. Darüber hinaus ist es jedoch auch möglich, wenn das Objekt z. B. aus drei unterschiedlichen Kameraperspektiven oder Kameraeinstellungen aufgenommen wird, eine 360° Ansicht oder ein 360° Modell zu erzeugen. Auch eine Kombination der genannten Ausgangssignalarten ist möglich. Die erfindungsgemäße 3D-Engine rendert dann die 3D- und Videoszenen und die 360° gemeinsam als eine Szene millimitergenau in Real-Time bzw. Echtzeit. Dieses Verfahren ist jedoch nicht auf die Überlagerung des Gesichts beschränkt, sondern kann vielmehr auch den ganzen Körper (kompletter Mensch) einschließen, der dann komplett als 3D-Modell in Echtzeit generiert werden kann. Dem 3D-Modell kann durch die Überlagerung ein verändertes Aussehen, beispielsweise mit mehr Muskeln oder weniger Bauch gegeben werden. Dies kann in Filmaufnahmen oder für Computerspiele oder interaktive Szenen angewendet werden, sowohl mit einer Kameraperspektive (Stereo), in 3D oder in einem 360° Modell. Ferner ist anzumerken, dass die erfindungsgemäße Vorrichtung nicht auf die Überlagerung von Körpern oder Gesichtern von Personen beschränkt ist, sondern auf jede beliebige Art von Objekten anwendbar ist.

Gemäß einem weiteren Ausführungsbeispiel kann eine komplette Bühne, als Beispiel ein Beatles-Konzert mit feststehenden Möbeln digitalisiert werden und dann in Echtzeit als 3D-Modell dargestellt werden. Sich bewegende Akteure, z. B. die Musiker und zusätzlich sich zu bewegende Gegenstände, wie beispielsweise die Gitarren oder Bierflaschen können dann getrennt betrachtet werden. So kann ein Zuschauer beispielsweise eine VR (Virtual Reality, dt.: virtuelle Realität) -Brille verwenden, um eine Ausgangsbildfolge 18 dargestellt zu bekommen, in der einerseits die Szenerie mit den feststehenden Möbeln und andererseits die Akteure bzw. Musiker dargestellt werden. Die Akteure können Schauspieler sein, deren Körper mit Körpern von der darzustellenden Bandmitglieder, beispielsweise der Beatles, in Echtzeit überlagert werden, so dass sich dem Zuschauer der Eindruck ergibt, er würde an einem realen Beatles-Konzert teilnehmen. Ergebnis ist ein live-VR-Konzert mit echten und überlagerten Künstlern (die Beatles vor 40 Jahren) mit Gitarren und anderen beweglichen Gegenständen, das als vollständiges Echtzeit-VR-Modell in 360° Rundumsicht betrachtbar ist. Somit kann der Zuschauer beispielsweise mit der VR-Brille auf der Bühne herumlaufen und an dem virtuellen Konzert partizipieren.

Ferner können in einem weiteren Ausführungsbeispiel Hologramme bzw. holographische Projektionen von verstorbenen Personen oder anderen Objekten oder Menschen erzeugt werden. Die Hologramme können von realen Darstellern an einem beliebigen Ort erstellt werden. Den Darstellern wird vor dem Erstellen des Hologramms die virtuelle Oberfläche überlagert, so dass das Hologramm den Darsteller mit der überlagerten Oberfläche zeigt. Das Hologramm kann dann auf die Bühne projiziert werden. Dort können die Hologramme, z.B. zusammen mit real anwesenden Schauspielern die auf der Bühne stehen, interagieren und kommunizieren. Die Hologramme folgen den Bewegungen und der Mimik der Darsteller. Die Projektion der Hologramme erfolgt daher vorteilhafterweise in Echtzeit, d.h. dass für den Zuschauer keine Verzögerung zwischen den Handlungen der real anwesenden Schauspieler und dem Hologramm sichtbar ist, wenn die Darsteller auf Aktionen der real anwesenden Schauspieler reagieren. Die Bühnendarstellung kann den Darsteller dafür z. B. auf einem Monitor angezeigt werden. Daher können sich die Darsteller auch an einem entfernten Ort aufhalten, an dem auch das Hologramm erzeugt wird. Das Hologramm kann dann z. B. über das Internet an einen holographischen Projektor auf oder neben der Bühne gesendet werden, der das z. B. über das Internet empfangene Hologramm holographisch auf die Bühne projiziert. In diesem Ausführungsbeispiel benötigen die Zuschauer ferner keine VR-Brillen oder andere Hilfsmittel, um die Bühnenpräsentation mit den Hologrammen ansehen zu können.

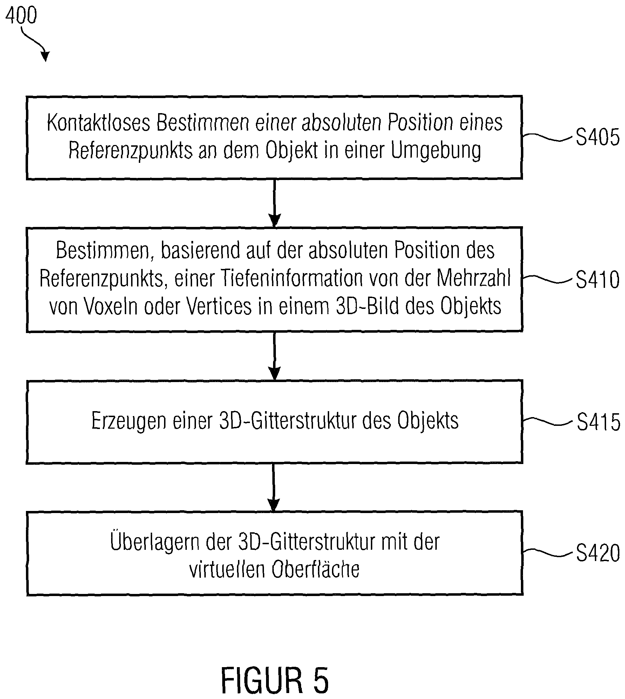

Fig. 5 zeigt ein schematisches Ablaufdiagramm eines Verfahrens zur Überlagerung zumindest eines Teils eines Objekts mit einer virtuellen Oberfläche. Das Verfahren 400 umfasst einen Schritt S405 mit kontaktlosem Bestimmen einer absoluten Position eines Referenzpunkts an dem Objekt in einer Umgebung, einen Schritt S410 mit Bestimmen, basierend auf der absoluten Position des Referenzpunkts, einer Tiefeninformation von der Mehrzahl von Voxeln oder Vertices in einem 3D-Bild des Objekts, einem Schritt S415 mit Erzeugen einer 3D-Gitterstruktur des Objekts und einem Schritt S420 mit Überlagern der 3D-Gitterstruktur mit der virtuellen Oberfläche.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmier-baren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (2) zur Überlagerung zumindest eines Teils eines 3D-Bildes (16) einer Person mit einer virtuellen Oberfläche (6), wobei die Vorrichtung (2) folgende Merkmale aufweist:
eine oder mehrere Kameras (26) zum Bereitstellen des 3D-Bildes (16) der Person (4), wobei basierend auf einer Position der einen oder mehreren Kameras (26) ein Relativkoordinatensystem (52) festgelegt ist, und
eine Recheneinheit (10), die ausgebildet ist, eine Tiefeninformation von einer Mehrzahl von Voxeln oder Vertices (20) in dem 3D-Bild (16) der Person (4) zu bestimmen und eine 3D-Gitterstruktur (22) der Person (4) zu erzeugen und die virtuelle Oberfläche (6) der 3D-Gitterstruktur (22) zu überlagern,
**gekennzeichnet durch**
einen Positionsbestimmer (8), der ausgebildet ist, eine absolute Position (12) eines Referenzpunkts (14) der Person (4) in einer Umgebung zu bestimmen,
drei Signalquellen (32a, 32b, 32c) zur Anbringung an der Person, wobei jede der drei Signalquellen (32) ausgebildet ist, ein Signal auszusenden, das sich von dem Signal der jeweils anderen Signalquellen unterscheidet,
drei Empfänger (34a, 34b, 34c,) zur Positionierung in sich unterscheidenden Winkeln um die Person (4), wobei die Empfänger mit dem Positionsbestimmer (8) verbunden sind und die Signale (36a, 36b, 36c) empfangen,
wobei der Positionsbestimmer (8) ausgebildet ist, eine Laufzeitinformation der empfangenen Signale (36a, 36b, 36c) von den Signalquellen (32a, 32b, 32c) zu den Empfängern (34a, 34b, 34c) zu bestimmen und basierend auf der Laufzeitinformation die absolute Position (12) und eine Ausrichtung des Referenzpunkts (14) der Person (4) in der Umgebung zu berechnen,
wobei Recheneinheit (10) ausgebildet ist, um
- die Tiefeninformation der Mehrzahl von Voxeln oder Vertices (20) in dem 3D-Bild (16) der Person (4) basierend auf der absoluten Position (12) des Referenzpunkts (14) zu bestimmen, und
- Positionen des Referenzpunkts in dem Absolutkoordinatensystem (50) und Relativkoordinatensystem (52) zu vergleichen, um eine Position jedes Voxel oder Vertices (20) in dem 3D-Bild zu berechnen, so dass eine Position in dem 3D-Bild, an dem die virtuelle Oberfläche ausgerichtet wird, und die Tiefeninformationen jedes Voxel oder Vertex in dem 3D-Bild bekannt sind.

2. Vorrichtung (2) gemäß Anspruch 1, wobei
die Signalquellen (32a, 32b, 32c) Reflektoren für Laserstrahlen umfassen, und
der Positionsbestimmer (8) ausgebildet ist, die absolute Position anhand einer Laufzeit der reflektierten Laserstrahlen zu bestimmen.

3. Vorrichtung (2) gemäß einem der vorherigen Ansprüche, wobei die eine oder mehreren Kameras (26) folgendes umfassen:
zwei gleichartigen Kameras (26a, 26b), die ausgebildet sind, jeweils ein Bild (28a, 28b) der Person (4) aus zwei sich voneinander unterscheidenden Blickwinkeln auf dir Person (4) aufzunehmen, wobei die Recheneinheit (10) ausgebildet ist, aus den Bildern (28) der zwei Kameras (26) das 3D-Bild (16) zu erzeugen, oder
eine stereoskopische Kamera.

4. Vorrichtung (2) gemäß einem der vorherigen Ansprüche, wobei die Recheneinheit (10) ausgebildet ist, eine 3D-Gitterstruktur (24) der virtuellen Oberfläche (6) zu berechnen, die 3D-Gitterstruktur (22) der Person (4) an die 3D-Gitterstruktur (24) der virtuellen Oberfläche (6) anzupassen, um eine angepasste 3D-Gitterstruktur zu erhalten und eine Textur der virtuellen Oberfläche (6) der angepassten 3D-Gitterstruktur zu überlagern.

5. Vorrichtung (2) gemäß Anspruch 4, wobei die Recheneinheit (10) ausgebildet ist, eine Differenzgitterstruktur aus der 3D-Gitterstruktur (22) der Person (4) und der 3D-Gitterstruktur (24) der virtuellen Oberfläche (6) zu ermitteln und die Differenzgitterstruktur auf die 3D-Gitterstruktur (22) der Person (4) anzuwenden, um die 3D-Gitterstruktur (22) der Person (4) an die 3D-Gitterstruktur der virtuellen Oberfläche (6) anzupassen und die angepasste 3D-Gitterstruktur zu erhalten.

6. Vorrichtung (2) gemäß Anspruch 5, wobei die Recheneinheit (10) ausgebildet ist, in einer Abfolge von 3D-Bildern (16) die Differenzgitterstruktur anzupassen, um eine Bewegung der Person (4) auf die virtuelle Oberfläche (6) zu übertragen, wobei die Recheneinheit (10) einen Anpassungswert basierend auf einer relativen Abweichung der 3D-Gitterstruktur (22) der Person (4) in einem aktuellen 3D-Bild (16) von der 3D-Gitterstruktur (22) der Person, mit der die Differenzgitterstruktur erzeugt ist, berechnet.

7. Vorrichtung (2) gemäß einem der vorherigen Ansprüche, wobei jedes Voxel oder Vertex (20) der Person (4) ein Gitterelement der 3D-Gitterstruktur (22) der Person bildet.

8. Vorrichtung (2) gemäß einem der vorherigen Ansprüche, wobei die Recheneinheit (10) ausgebildet ist, eine kombinierte Oberfläche zu formen, wobei ein Teil der Person (4), der von der Überlagerung mit der virtuellen Oberfläche (6) ausgenommen ist, einen realen Oberflächenbereich der Person (4) aufweist.

9. Vorrichtung (2) gemäß einem der vorherigen Ansprüche, wobei der Positionsbestimmer (8) die absolute Position (12) des Referenzpunkts (14) mittels Sonar, mittels Radar, mittels Ultraschall, mittels Laserabtastung und/oder mittels RFID bestimmt.

10. Vorrichtung (2) gemäß einem der vorherigen Ansprüche, mit einer Simulationseinheit (30), die ausgebildet ist, ein 360° 3D-Modell der virtuellen Oberfläche (6) zu erzeugen, wobei die Recheneinheit (10) ausgebildet ist, der Person (4) einen Ausschnitt der virtuellen Oberfläche (6), abhängig von einem Blickwinkel auf die Person (4), zu überlagern.

11. Verfahren (400) zur Überlagerung zumindest eines Teils eines 3D-Bildes (16) einer Person mit einer virtuellen Oberfläche mit folgenden Schritten:
Bereitstellen des 3D-Bildes (16) der Person (4) durch eine oder mehrere Kameras (26), wobei basierend auf einer Position der einen oder mehreren Kameras (26) ein Relativkoordinatensystem (52) festgelegt ist,
Bestimmen einer Tiefeninformation von einer Mehrzahl von Voxeln oder Vertices (20) in dem 3D-Bild (16) der Person (4),
Erzeugen (S415) einer 3D-Gitterstruktur der Person und Überlagern (S420) der 3D-Gitterstruktur mit der virtuellen Oberfläche,
**gekennzeichnet durch**
Anbringen von drei Signalquellen (32a, 32b, 32c) an der Person, wobei jede der drei Signalquellen (32) ausgebildet ist, ein Signal auszusenden, das sich von dem Signal der jeweils anderen Signalquellen unterscheidet,
Positionieren von drei Empfängern (34a, 34b, 34c,) in sich unterscheidenden Winkeln um die Person (4), wobei die Empfänger mit einem Positionsbestimmer (8) verbunden sind und die Signale (36a, 36b, 36c) empfangen, und der Positionsbestimmer ausgebildet ist, eine absolute Position (12) eines Referenzpunkts (14) der Person (4) in einer Umgebung zu bestimmen,
Bestimmen einer Laufzeitinformation der empfangenen Signale (36a, 36b, 36c) von den Signalquellen (32a, 32b, 32c) zu den Empfängern (34a, 34b, 34c) zu bestimmen,
Berechnen, basierend auf der Laufzeitinformation, eine absolute Position (12) und eine Ausrichtung des Referenzpunkts (14) der Person (4) in einer Umgebung,
Bestimmen der Tiefeninformation der Mehrzahl von Voxeln oder Vertices (20) in dem 3D-Bild (16) der Person (4) basierend auf der absoluten Position (12) des Referenzpunkts (14),
Vergleichen der Positionen des Referenzpunkts in dem Absolutkoordinatensystem (50) und Relativkoordinatensystem (52), um eine Position jedes Voxel oder Vertices (20) in dem 3D-Bild zu berechnen, so dass eine Position in dem 3D-Bild, an dem die virtuelle Oberfläche ausgerichtet wird, und die Tiefeninformationen jedes Voxel oder Vertex in dem 3D-Bild bekannt sind.

## Claims

1. Apparatus (2) for superimposing at least part of a 3D image (16) of a person with a virtual surface (6), the apparatus (2) comprising:
one or several cameras (26) for providing the 3D image (16) of the person (4), wherein a relative coordinate system (52) is set on the basis of a position of the one or several cameras (26), and
a computing unit (10), which is configured to determine depth information from a plurality of voxels or vertices (20) in the 3D image (16) of the person (4) and to generate a 3D grid structure (22) of the person (4) and to superimpose the virtual surface (6) of the 3D grid structure (22),
**characterized by**
a position determiner (8), which is configured to determine an absolute position (12) of a reference point (14) of the person (4) in an environment,
three signal sources (32a, 32b, 32c) for attachment to the person, wherein each of the three signal sources (32) is configured to emit a signal that differs from the signal of the respective other signal sources,
three receivers (34a, 34b, 34c) for positioning at differing angles around the person (4), wherein the receivers are connected to the position determiner (8) and receive the signals (36a, 36b, 36c),
wherein the position determiner (8) is configured to determine runtime information of the received signals (36a, 36b, 36c) from the signal sources (32a, 32b, 32c) to the receivers (34a, 34b, 34c) and to compute the absolute position (12) and an orientation of the reference point (14) of the person (4) in the environment on the basis of the runtime information,
wherein the computing unit (10) is configured to
- determine the depth information of the plurality of voxels or vertices (20) in the 3D image (16) of the person (4) on the basis of the absolute position (12) of the reference point (14), and
- compare positions of the reference point in the absolute coordinate system (50) and relative coordinate system (52) in order to compute a position of each voxel or vertex (20) in the 3D image, so that a position in the 3D image at which the virtual surface is oriented and the depth information of each voxel or vertex in the 3D image are known.

2. Apparatus (2) according to claim 1, wherein
the signal sources (32a, 32b, 32c) comprise reflectors for laser beams, and
the position determiner (8) is configured to determine the absolute position on the basis of a runtime of the reflected laser beams.

3. Apparatus (2) according to any one of the preceding claims, wherein the one or several cameras (26) include:
two similar cameras (26a, 26b), which are configured to each capture an image (28a, 28b) of the person (4) from two viewing angles on the person (4) that differ from one another, wherein the computing unit (10) is configured to generate the 3D image (16) from the images (28) of the two cameras (26), or
a stereoscopic camera.

4. Apparatus (2) according to any one of the preceding claims, wherein the computing unit (10) is configured to compute a 3D grid structure (24) of the virtual surface (6), to adapt the 3D grid structure (22) of the person (4) to the 3D grid structure (24) of the virtual surface (6) in order to obtain an adapted 3D grid structure and to superimpose a texture of the virtual surface (6) on the adapted 3D grid structure.

5. Apparatus (2) according to claim 4, wherein the computing unit (10) is configured to determine a difference grid structure from the 3D grid structure (22) of the person (4) and the 3D grid structure (24) of the virtual surface (6) and to apply the difference grid structure to the 3D grid structure (22) of the person (4) in order to adapt the 3D grid structure (22) of the person (4) to the 3D grid structure of the virtual surface (6) and to obtain the adapted 3D grid structure.

6. Apparatus (2) according to claim 5, wherein the computing unit (10) is configured to adapt the difference grid structure in a sequence of 3D images (16) in order to transfer a movement of the person (4) to the virtual surface (6), wherein the computing unit (10) computes an adaptation value based on a relative deviation of the 3D grid structure (22) of the person (4) in a current 3D image (16) from the 3D grid structure (22) of the person with which the difference grid structure is generated.

7. Apparatus (2) according to any one of the preceding claims, wherein each voxel or vertex (20) of the person (4) forms a grid element of the 3D grid structure (22) of the person.

8. Apparatus (2) according to any one of the preceding claims, wherein the computing unit (10) is configured to form a combined surface, wherein a part of the person (4), which is excluded from the superimposition with the virtual surface (6), comprises a real surface region of the person (4).

9. Apparatus (2) according to any one of the preceding claims, wherein the position determiner (8) determines the absolute position (12) of the reference point (14) by means of sonar, by means of radar, by means of ultrasound, by means of laser scanning and/or by means of RFID.

10. Apparatus (2) according to any one of the preceding claims, comprising a simulation unit (30), which is configured to generate a 360° 3D model of the virtual surface (6), wherein the computing unit (10) is configured to superimpose a section of the virtual surface (6) on the person (4) depending on a viewing angle on the person (4).

11. Method (400) for superimposing at least part of a 3D image (16) of a person with a virtual surface, comprising:
providing the 3D image (16) of the person (4) by one or several cameras (26), wherein a relative coordinate system (52) is set on the basis of a position of the one or several cameras (26),
determining depth information from a plurality of voxels or vertices (20) in the 3D image (16) of the person (4),
generating (S415) a 3D grid structure of the person; and
superimposing (S420) the 3D grid structure with the virtual surface,
**characterized by**
attaching three signal sources (32a, 32b, 32c) to the person, wherein each of the three signal sources (32) is configured to emit a signal that differs from the signal of the respective other signal sources,
positioning three receivers (34a, 34b, 34c) at differing angles around the person (4), wherein the receivers are connected to a position determiner (8) and receive the signals (36a, 36b, 36c), and the position determiner is configured to determine an absolute position (12) of a reference point (14) of the person (4) in an environment,
determining runtime information of the received signals (36a, 36b, 36c) from the signal sources (32a, 32b, 32c) to the receivers (34a, 34b, 34c),
computing an absolute position (12) and an orientation of the reference point (14) of the person (4) in an environment on the basis of the runtime information,
determining the depth information of the plurality of voxels or vertices (20) in the 3D image (16) of the person (4) on the basis of the absolute position (12) of the reference point (14),
comparing the positions of the reference point in the absolute coordinate system (50) and relative coordinate system (52) in order to compute a position of each voxel or vertex (20) in the 3D image, so that a position in the 3D image at which the virtual surface is oriented and the depth information of each voxel or vertex in the 3D image are known.

## Revendications

1. Dispositif (2) pour superposer au moins une partie d'une image 3D (16) d'une personne avec une surface virtuelle (6), dans lequel le dispositif (2) présente les caractéristiques suivantes:
une ou plusieurs caméras (26) destinées à fournir l'image 3D (16) de la personne (4), où est fixé, sur base d'une position des une ou plusieurs caméras (26), un système de coordonnées relatives (52), et
une unité de calcul (10) qui est conçue pour déterminer une information de profondeur d'une pluralité de voxels ou sommets (20) dans l'image 3D (16) de la personne (4) et pour générer une structure de grille 3D (22) de la personne (4) et pour superposer la surface virtuelle (6) sur la structure de grille 3D (22),
**caractérisé par**
un moyen de détermination de position (8) qui est conçu pour déterminer une position absolue (12) d'un point de référence (14) de la personne (4) dans un environnement,
trois sources de signaux (32a, 32b, 32c) destinées à être fixées sur la personne, où chacune des trois sources de signaux (32) est conçue pour émettre un signal qui diffère du signal des autres sources de signaux respectives,
trois récepteurs (34a, 34b, 34c) destinés à être positionnés selon différents angles autour de la personne (4), où les récepteurs sont connectés au moyen de détermination de position (8) et reçoivent les signaux (36a, 36b, 36c),
dans lequel le moyen de détermination de position (8) est conçu pour déterminer une information de durée de parcours des signaux reçus (36a, 36b, 36c) des sources de signaux (32a, 32b, 32c) vers les récepteurs (34a, 34b, 34c) et pour calculer, sur base de l'information de durée de parcours, la position absolue (12) et une orientation du point de référence (14) de la personne (4) dans l'environnement,
dans lequel l'unité de calcul (10) est conçue pour
- déterminer l'information de profondeur de la pluralité de voxels ou sommets (20) dans l'image 3D (16) de la personne (4) sur base de la position absolue (12) du point de référence (14), et
- comparer les positions du point de référence dans le système de coordonnées absolues (50) et le système de coordonnées relatives (52) pour calculer une position de chaque voxel ou sommet (20) dans l'image 3D, de sorte que soient connues une position dans l'image 3D sur laquelle est orientée la surface virtuelle et les informations de profondeur de chaque voxel ou sommet de l'image 3D.

2. Dispositif (2) selon la revendication 1, dans lequel
les sources de signaux (32a, 32b, 32c) comportent des réflecteurs pour les faisceaux laser, et
le moyen de détermination de position (8) est conçu pour déterminer la position absolue à l'aide d'un durée de parcours des faisceaux laser réfléchis.

3. Dispositif (2) selon l'une des revendications précédentes, dans lequel l'une ou les plusieurs caméras (26) comportent les éléments suivants:
deux caméras similaires (26a, 26b) qui sont conçues, chacune, pour capturer une image (28a, 28b) de la personne (4) sous deux angles de vision différents de la personne (4), où l'unité de calcul (10) est conçue pour générer, à partir des images (28) des deux caméras (26), l'image 3D (16), ou
une caméra stéréoscopique.

4. Dispositif (2) selon l'une des revendications précédentes, dans lequel l'unité de calcul (10) est conçue pour calculer une structure de grille 3D (24) de la surface virtuelle (6), pour adapter la structure de grille 3D (22) de la personne (4) à la structure de grille 3D (24) de la surface virtuelle (6) pour obtenir une structure de grille 3D adaptée et pour superposer une texture de la surface virtuelle (6) de la structure de grille 3D adaptée.

5. Dispositif (2) selon la revendication 4, dans lequel l'unité de calcul (10) est conçue pour déterminer une structure de grille différentielle à partir de la structure de grille 3D (22) de la personne (4) et de la structure de grille 3D (24) de la surface virtuelle (6) et pour appliquer la structure de grille différentielle à la structure de grille 3D (22) de la personne (4) pour adapter la structure de grille 3D (22) de la personne (4) à la structure de grille 3D de la surface virtuelle (6) et pour obtenir la structure de grille 3D adaptée.

6. Dispositif (2) selon la revendication 5, dans lequel l'unité de calcul (10) est conçue pour adapter la structure de grille différentielle dans une séquence d'images 3D (16) pour transmettre un mouvement de la personne (4) à la surface virtuelle (6), dans lequel l'unité de calcul (10) calcule une valeur d'adaptation, sur base d'un écart relatif de la structure de grille 3D (22) de la personne (4) dans une image 3D actuelle (16) de la structure de grille 3D (22) de la personne avec laquelle est générée la structure de grille différentielle.

7. Dispositif (2) selon l'une des revendications précédentes, dans lequel chaque voxel ou sommet (20) de la personne (4) forme un élément de grille de la structure de grille 3D (22) de la personne.

8. Dispositif (2) selon l'une des revendications précédentes, dans lequel l'unité de calcul (10) est conçue pour former une surface combinée, dans lequel une partie de la personne (4) qui est exclue de la superposition avec la surface virtuelle (6) présente une zone de surface réelle de la personne (4).

9. Dispositif (2) selon l'une des revendications précédentes, dans lequel le moyen de détermination de position (8) détermine la position absolue (12) du point de référence (14) au moyen d'un sonar, au moyen d'un radar, au moyen d'un ultrason, au moyen d'un balayage laser et/ou au moyen de RFID.

10. Dispositif (2) selon l'une des revendications précédentes, avec une unité de simulation (30) qui est conçue pour générer un modèle 3D de 360° de la surface virtuelle (6), dans lequel l'unité de calcul (10) est conçue pour superposer à la personne (4) un segment de la surface virtuelle (6), en fonction d'un angle de vue sur la personne (4).

11. Procédé (400) permettant de superposer au moins une partie d'une image 3D (16) d'une personne avec une surface virtuelle aux étapes suivantes consistant à:
fournir l'image 3D (16) de la personne (4) par une ou plusieurs caméras (26), où est établi, sur base d'une position de l'une ou des plusieurs caméras (26), un système de coordonnées relatives (52),
déterminer une information de profondeur d'une pluralité de voxels ou sommets (20) dans l'image 3D (16) de la personne (4),
générer (S415) une structure de grille 3D de la personne et superposer (S420) la structure de grille 3D à la surface virtuelle,
**caractérisé par** le fait de
placer trois sources de signaux (32a, 32b, 32c) sur la personne, où chacune des trois sources de signaux (32) est conçue pour émettre un signal qui diffère du signal des autres sources de signaux,
positionner trois récepteurs (34a, 34b, 34c) selon des angles différents entre eux autour de la personne (4), où les récepteurs sont connectés à un moyen de détermination de position (8) et reçoivent les signaux (36a, 36b, 36c), et le moyen de détermination de position est formé pour déterminer une position absolue (12) d'un point de référence (14) de la personne (4) dans un environnement,
déterminer une information de durée de parcours des signaux reçus (36a, 36b, 36c) des sources de signaux (32a, 32b, 32c) vers les récepteurs (34a, 34b, 34c),
calculer, sur base de l'information de durée de parcours, une position absolue (12) et une orientation du point de référence (14) de la personne (4) dans un environnement,
déterminer l'information de profondeur de la pluralité de voxels ou sommets (20) dans l'image 3D (16) de la personne (4) sur base de la position absolue (12) du point de référence (14),
comparer les positions du point de référence dans le système de coordonnées absolues (50) et le système de coordonnées relatives (52) pour calculer une position de chaque voxel ou sommet (20) dans l'image 3D, de sorte que soient connues une position dans l'image 3D sur laquelle est orientée la surface virtuelle et les informations de profondeur de chaque voxel ou sommet dans l'image 3D.
